# EUROPÄISCHE PATENTANMELDUNG

(11) **EP 2 955 040 A2**
(43) Veröffentlichungstag der Anmeldung: **16.12.2015**
(21) Anmeldenummer: 15001574.1
(22) Anmeldetag: 23.05.2015
(51) Int. Cl.: B60G 7/00, B60G 7/02

(54) **LENKERVERSCHRAUBUNG EINES LENKERS EINES FAHRWERKS EINES KRAFTFAHRZEUGS**

(30) Priorität: 11.06.2014 DE 102014008563
(71) Anmelder: MAN Truck & Bus AG, 80995 München (DE)
(72) Erfinder: Hörmann, Robert, 85461 Bockhorn (DE)

(57) **Zusammenfassung**

Die Erfindung betrifft die Anbindung eines Lenkers eines Fahrwerks an einer Achse, einem Radträger und/oder am Fahrzeugaufbau eines Kraftfahrzeugs, insbesondere eines Nutzfahrzeugs. Die Erfindung betrifft insbesondere die Lenkerverschraubung (20) zur Befestigung des Lenkers an einer Achse, einem Radträger oder dem Fahrzeugaufbau. Der Lenker (5) umfasst eine endseitig angeordnete Lageraufnahme (6) und ein in der Lageraufnahme (6) aufgenommenes Lagergelenk (16), wobei das Lagergelenk (16) beidseitig jeweils ein äußeres Verbindungselement (8) aufweist, das mit einer Lenkeraufnahme (7) verschraubt ist, die am Fahrzeugaufbau, der Achse oder dem Radträger vorgesehen ist. Zum Einstellen eines Abstands des Verbindungselements 8 zur Lenkeraufnahme (7) ist eine Gewindebuchse (12), aufweisend einen Buchsenkopf (12a) und einen Buchsenschaft (12b), vorgesehen, die mit einem Außengewinde des Buchsenschafts (12b) in ein Innengewinde der Lenkeraufnahme (7) eingreift und deren Buchsenkopf (12a) eine der Lenkeraufnahme (7) zugewandte Seite des Verbindungselementes (8) abstützt.

## Beschreibung

Die Erfindung betrifft die Anbindung eines Lenkers eines Fahrwerks an einer Achse, einem Radträger und/oder am Fahrzeugaufbau eines Kraftfahrzeugs, insbesondere eines Nutzfahrzeugs. Die Erfindung betrifft insbesondere die Lenkerverschraubung zur Befestigung des Lenkers an einer Achse, einem Radträger oder dem Fahrzeugaufbau.

Üblicherweise werden die Fahrzeugachsen über Längs-, Dreiecks- und Querlenker an der Rahmenstruktur des Fahrzeugaufbaus angebunden. Die Achseinstellung (Achsneigung, Mittenversatz, Winkligkeit zur Fahrzeuglängsachse, Nachlauf und Sturz) erfolgt üblicherweise durch Beilegen von unterschiedlich dicken Scheiben, was die Anzahl der Trennfugen erhöht und einen höheren Vorspannungsverlust der Schraubenverbindung bedeutet.

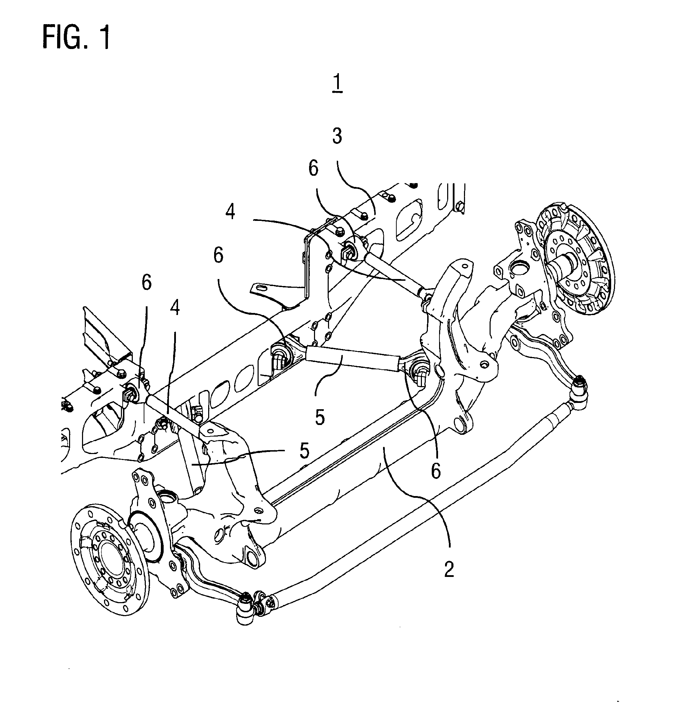

Figur 1 zeigt beispielsweise eine aus dem Stand der Technik bekannte Vorderachs-Anlenkung 1 eines Nutzfahrzeuges, die aus einer Achsführung durch an beiden Fahrzeugseiten angeordnete Längslenker 4, die einerseits an der Fahrzeugachse 2 und andererseits an der Rahmenstruktur 3 angelenkt sind, und einem Dreieckslenker 5, der ebenfalls sowohl an der Achse als auch der Rahmenstruktur 3 angelenkt ist, gebildet wird.

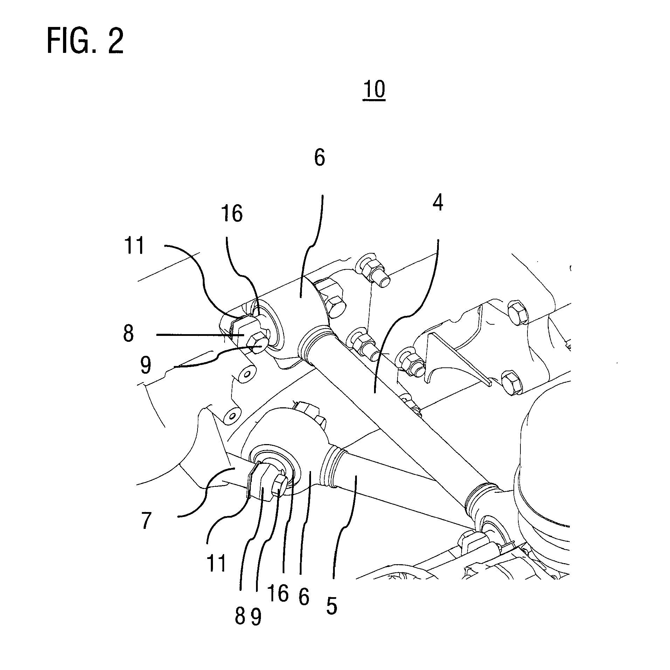

Die Lenkerverschraubung 10 ist in Figur 2 in einer Ausschnittsansicht vergrößert dargestellt.

Zur gelenkigen Verbindung derartiger Lenker 4, 5 an die Rahmenstruktur 3 sowie zur gelenkigen Anbindung an den Achskörper 2 weisen die Lenker 4, 5 endseitig jeweils eine hohlzylindrische Lageraufnahme 6, auch als Lagerauge bezeichnet, auf. In den Lageraufnahmen 6 befindet sich jeweils ein Lager 16, nachfolgend auch als Lagergelenk bezeichnet, beispielsweise ein Gleitlager oder ein Molekularlager, so dass die Gelenkverbindung kardanisch beweglich ausgeführt ist.

Über die äußeren Pratzen 8 der Gelenklager 16 werden die Lenker am Fahrzeugrahmen 3 oder der Achse 3 mit einer Schraube 9 verschraubt.

Die Achseinstellung (Achsneigung, Mittenversatz, Winkligkeit zur Fahrzeuglängsachse) erfolgt üblicherweise durch Beilegen von unterschiedlich dicken Scheiben 11 zwischen Rahmenstruktur 3 und Längs-/ Dreieckslenker 4, 5. Dies erhöht die Anzahl der Trennfugen und bedeutet einen höheren Vorspannungsverlust der Schraubenverbindung. Ferner ist die Achseinstellung zweitaufwändig, da es notwendig sein kann, die Lenkerverschraubung durch Entfernen der Schraube 9 zu lösen und die Anzahl und/oder Dicke der Beilegscheiben 11 zu verändern, bis eine optimale Achseinstellung vorliegt.

Bei einer Einzelradaufhängung, bei der die Radhälften mittels oberer und unterer Querlenker an der Rahmenstruktur angebunden werden, können ebenfalls durch Beilegen von Scheiben der Sturz und Nachlauf eingestellt werden, verbunden mit den gleichen Nachteilen wie zuvor beschrieben.

Des Weiteren ist es bekannt, dass die Achseinstellung auch über längenverstellbare Längslenker erfolgen kann, die jedoch vergleichsweise teurer in der Herstellung sind.

Es ist somit eine Aufgabe der Erfindung, eine verbesserte und/oder alternative Möglichkeit zur Achseinstellung zu schaffen. Der Erfindung liegt insbesondere die Aufgabe zugrunde, einer Lenkeranbindung bereitzustellen, die eine einfachere und schnellere Achseinstellung ermöglicht.

Diese Aufgaben werden durch eine Lenkerverschraubung mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Lenkerverschraubung dient zur Anbindung eines Lenkers eines Fahrwerks eines Kraftfahrzeugs, insbesondere eines Nutzfahrzeugs, an einen Fahrzeugaufbau, an eine Achse und/oder an einen Radträger.

Der Lenker der Lenkerverschraubung weist in Übereinstimmung mit dem Stand der Technik eine endseitig angeordnete Lageraufnahme und ein in der Lageraufnahme aufgenommenes Lager bzw. Lagergelenk auf. Das Lagergelenk weist ferner beidseitig in Querrichtung des Lenkers jeweils ein äußeres Verbindungselement, nachfolgend auch als Pratze bezeichnet, auf, das mit einer Lenkeraufnahme verschraubt ist, die am Fahrzeugaufbau, der Achse oder dem Radträger vorgesehen ist. Je nachdem, ob eine rahmenseitige oder achsseitige Lenkeranbindung erfolgen soll, ist die Lenkeraufnahme fest am Rahmen oder der Achse befestigt. An der Lenkeraufnahme, nachfolgend auch als Lenkeranbindung bezeichnet, ist die Schraube der Lenkerverschraubung verschraubt, beispielsweise durch ein Innengewinde der Lenkeraufnahme und/oder eine Mutter zur Sicherung der Verschraubung.

Gemäß allgemeinen Gesichtspunkten der Erfindung umfasst die Lenkerverschraubung für jedes der beiden Verbindungselemente eine Gewindebuchse, die einen Kopf und einen Schaft aufweist, nachfolgend auch als Buchsenkopf und als Buchsenschaft bezeichnet. Die nachfolgenden Ausführungen sollen für beide Gewindebuchse gelten. Die Gewindebuchse greift mit einem Außengewinde des Buchsenschafts in ein Innengewinde der Lenkeraufnahme ein. Der Buchsenkopf stützt eine der Lenkeraufnahme zugewandte Seite des Verbindungselementes ab.

Über zwei derartige beidseitig vom Lenker angeordnete Gewindebuchsen kann somit der Abstand jedes der beiden Verbindungselemente zur jeweiligen Lenkeraufnahme eingestellt werden und damit zur Achseinstellung verwendet werden. Nach erfolgter Fahrzeugmontage und Achsvermessung können die Parameter für die Achseinstellung (Achsneigung, Mittenversatz, Winkligkeit zur Fahrzeuglängsachse) oder der Einzelradaufhängung (Nachlauf und Sturz) durch Ein- bzw. Ausdrehen der Gewindebuchse in/aus der rahmen- oder achsseitigen Lenkeranbindung eingestellt werden. Anschließend wird die Anordnung mit der Lenkerverschraubung angezogen/verspannt. Durch die Schraubenvorspannkraft wird ein Verdrehen der Gewindebuchse verhindert.

Ein besonderer Vorzug der Erfindung liegt somit darin, dass eine einstellbare Achslenkerverschraubung zum Einstellen von Achsneigung, Mittenversatz, Winkligkeit, Nachlauf und Sturz von Hinter-, Vorder-, Vor- und/oder Nachlaufachsen bereitgestellt wird, wobei die Achseinstellung durch einfaches Drehen der Gewindebuchse erfolgen kann und das zeitaufwändige Austauschen der Beilegscheiben entfällt. Die Einstellzeit in der Montage kann somit verkürzt werden.

Eine weiterer Vorteil liegt in der Reduzierung von Fügeflächen und den dadurch resultierenden geringeren Vorspannungsverlust. Dadurch kann ferner ein Schraubennachzug im Service entfallen. Ferner bietet diese Lösung eine Kosteneinsparung im Vergleich zu längenverstellbaren Lenkern. Die erfindungsgemäße Lenkerverschraubung ist zudem flexibel für Längs-, Dreieck- und Querlenker anwendbar.

Gemäß einer bevorzugten Ausgestaltungsform der Lenkerverschraubung kann das äußere Verbindungselement des Lagers eine erste Durchgangsöffnung und die Lenkeraufnahme eine zweite Öffnung aufweisen, wobei die erste Durchgangsöffnung und die zweite Öffnung zueinander fluchtend angeordnet sind.

Gemäß dieser Variante greift ein Außengewinde des Buchsenschafts in ein Innengewinde der zweiten Öffnung ein, und eine Buchsenöffnung der Gewindebuchse ist bezüglich der zweiten Öffnung fluchtend ausgerichtet. Ferner stützt gemäß dieser Variante der Buchsenkopf einen der Lenkeraufnahme zugewandten, die erste Durchgangsöffnung einfassenden Durchgangsöffnungsrand ab. Der Buchsenkopf ist somit zwischen der ersten Durchgangsöffnung und der zweiten Öffnung angeordnet.

Gemäß dieser Variante ist der Lenker ferner mit der Lenkeraufnahme durch eine Schraube, aufweisend einen Schraubenkopf und einen Schraubenschaft, verschraubt, die mit dem Schraubenschaft die beiden Öffnungen und die Gewindebuchse durchsetzt.

Hierbei kann sich die Schraube mit dem Schraubenkopf an einem von der Lenkeraufnahme abgewandten, die erste Durchgangsöffnung einfassenden Durchgangsöffnungsrand abstützten. Alternativ kann die erste Durchgangsöffnung als Innengewinde ausgeführt und der Schraubenschaft im Innengewinde verschraubt bzw. vorgespannt sein, wobei der Schraubenkopf auf einer zu der ersten Durchgangsöffnung abgewandten Seite der Lenkeraufnahme angeordnet ist. In dieser Variante ist die Schraube somit von "hinten" durch die Lenkeraufnahme und Gewindebuchse geführt.

Ferner kann der Buchsenkopf der Gewindebuchse Formelemente zum formschlüssigen Kontakt mit Werkzeugen für das Drehen der Gewindeschraube aufweisen, vorzugsweise einen Außenmehrkant. Damit kann die Gewindebuchse durch seitlichen Zugriff mit einem entsprechendem Werkzeug gedreht werden. Dadurch kann der Abstand zwischen dem Verbindungselement des Lagers bzw. dem Lenker und der Lenkeraufnahme bzw. der Anlenkstelle am Rahmen bzw. der Achse im montierten Zustand der Lenkerverschraubung, bei nicht angezogener Schraube, verändert werden.

Die Erfindung ist hinsichtlich des konstruktiven Aufbaus des Lenkers nicht auf einen bestimmten Aufbau beschränkt. Der Lenker kann insbesondere ein Längslenker, ein Querlenker, ein Lenker eines Dreieckslenkers, ein Lenkerarm eines Vierpunktlenkers oder ein Panhardstab sein. Der Begriff eine Lenkers ist im Sinne dieses Dokumentes breit auszulegen, so dass allgemein unter einem Lenker ein Fahrwerksführungselement, wie beispielsweise ein Panhardstab, verstanden werden soll.

Ferner kann die Lenkerverschraubung zur Anbindung einer Hinter-, Vorder-, Vor- und/oder Nachlaufachse an eine Kraftfahrzeugkarosserie, ein Fahrzeuggerippe, einen Fahrzeugleiterrahmen oder eine Fahrzeugrahmenstruktur eines Nutzfahrzeugs verwendet werden. Die Erfindung soll somit auch derartige Achsaufhängungen mit einer Lenkerverschraubung, wie vorstehend beschrieben, umfassen.

Die Erfindung betrifft ferner Nutzfahrzeug mit einer Lenkerverschraubung wie vorstehend beschrieben.

Weitere Einzelheiten und Vorteile der Erfindung werden im Folgenden unter Bezug auf die beigefügten Zeichnungen beschrieben. Es zeigen:
- Figur 1: eine aus dem Stand der Technik bekannte Vorderachsanlenkung;
- Figur 2: einen Ausschnitt der Figur 1 zur Illustration einer aus dem Stand der Technik bekannten Lenkerverschraubung;
- Figur 3: eine Draufsicht einer Lenkerverschraubung gemäß einem Ausführungsbeispiel; und
- Figur 4: eine Seitenansicht der Lenkerverschraubung aus Figur 3.

Gleiche oder funktional äquivalente Elemente sind in allen Figuren mit denselben Bezugszeichen bezeichnet und werden nicht für jede Figur gesondert beschrieben.

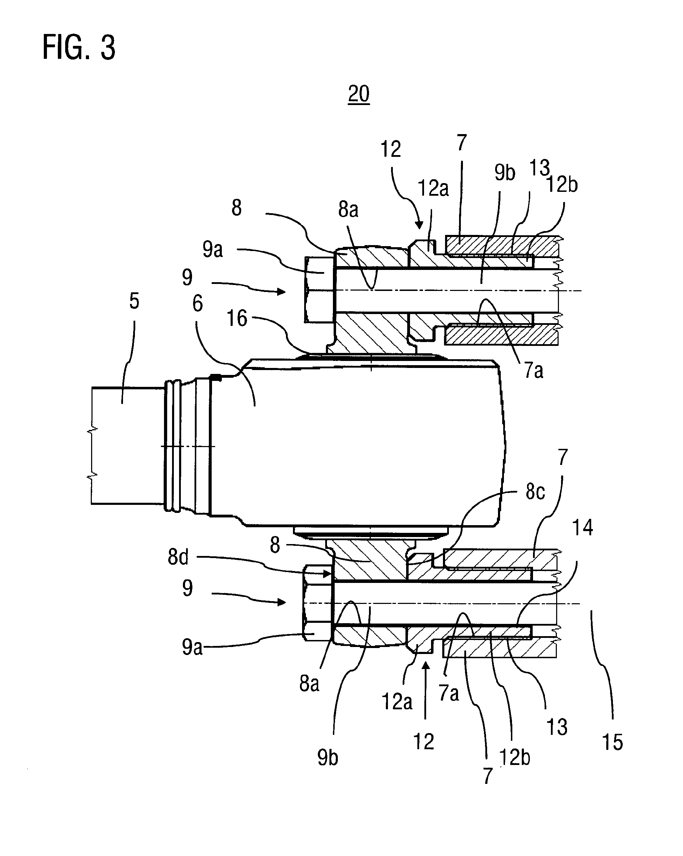

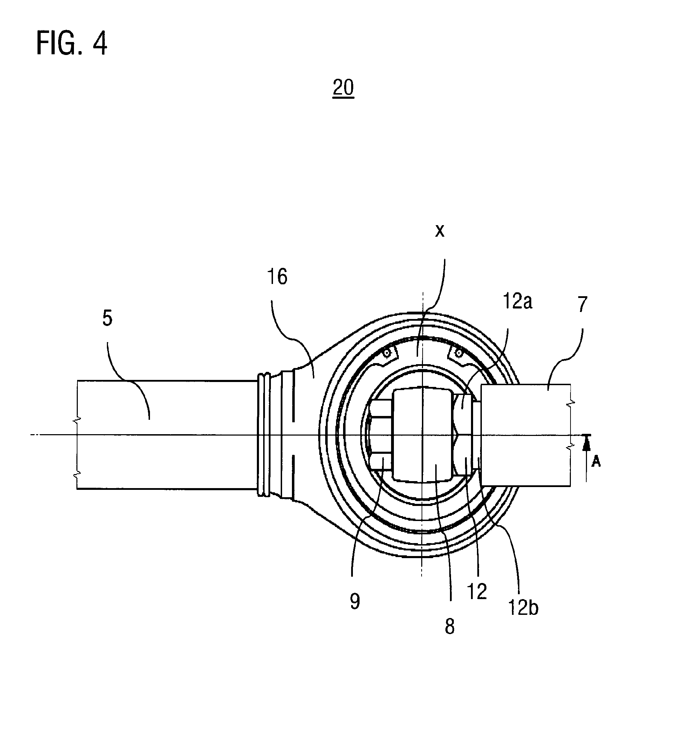

Figur 3 zeigt eine Draufsicht eines Ausführungsbeispiels einer Lenkerverschraubung 20 zur achsseitigen oder rahmenseitigen Anbindung eines Lenkers 5 oder zur Anbindung des Lenkers an einen Radträger bei einer Einzelradaufhängung. Figur 4 zeigt eine Seitenansicht der Lenkerverschraubung aus Figur 3.

Wie vorstehend betreffend die Figuren 1 und 2 erläutert, weist der Lenker 5 eine endseitig angeordnete Lageraufnahme 6 und ein in der Lageraufnahme 6 aufgenommenes Lagergelenk 16 auf. Das Lagergelenk 16 weist beidseitig in Querrichtung des Lenkers jeweils ein äußeres Verbindungselement (Pratze) 8 auf, das mit einer Lenkeraufnahme 7 verschraubt ist, die am Fahrzeugaufbau, der Achse oder dem Radträger befestigt ist.

Die beiden äußeren Pratzen 8 weisen hierzu jeweils eine erste Durchgangsöffnung 8a auf. Entsprechend weist jeder der Lenkeraufnahmen 7 jeweils eine zweite Öffnung 7a auf, wobei die jeweils eine der ersten Durchgangsöffnungen 8a und eine der zweiten Öffnungen 7a zueinander fluchtend angeordnet sind.

Zum Einstellen des Abstands des Verbindungselements 8 zur entsprechenden Lenkeraufnahme 7 ist auf beiden Seiten des Lagerauges 6 eine Gewindebuchse 12 vorgesehen. Die Verbindungselemente 8, die Lenkeraufnahmen 7 und die Gewindebuchse sind auf beiden Seiten des Lagerauges 6 baugleich ausgeführt Ein Außengewinde des hohlzylinderförmigen Schafts 12b der Buchse 12 greift in ein Innengewinde der zweiten Öffnung 7a ein, was mit dem Bezugszeichen 13 dargestellt ist. Die Gewindebuchse 12 hat kein Innengewinde; die Innenfläche 14 der Gewindeöffnung ist glatt. Die Buchsenöffnung der Gewindebuchse 12 ist bezüglich der zweiten Öffnung 7a fluchtend ausgerichtet.

Der Kopf 12a der Gewindebuchse 12 ist zwischen der ersten Durchgangsöffnung 8a und der zweiten Öffnung 7a angeordnet und stützt einen der Lenkeraufnahme 7 zugewandten, die erste Durchgangsöffnung 8a einfassenden Durchgangsöffnungsrand 8c ab. Der Kopf 12a ist als Außenmehrkantkopf, beispielsweise als Außensechskant, ausgebildet.

Der Lenker 5 ist mit der Lenkeraufnahme 7 durch eine Schraube 9 verschraubt. Der Schaft 9b der Schraube 9 durchsetzt die beiden Öffnungen 7a, 8a und die Gewindebuchse 12 und ist in dem Bereich 15 mit einem Gewinde der Lenkeraufnahme verschraubt und/oder mit einer Mutter gesichert (nicht gezeigt). Der Kopf 9a der Schraube 9 stützt sich an einem von der Lenkeraufnahme 7 abgewandten, die erste Durchgangsöffnung 8a einfassenden Durchgangsöffnungsrand 8d ab.

Nach erfolgter Fahrzeugmontage und Achsvermessung können die Parameter für die Achseinstellung (Achsneigung, Mittenversatz, Winkligkeit zur Fahrzeuglängsachse) oder der Einzelradaufhängung (Nachlauf und Sturz) durch Ein- bzw. Ausdrehen der Gewindebuchse 12 in/aus der rahmen- oder achsseitigen Lenkeranbindung 7 eingestellt werden. Anschließend wird die Anordnung mit der Lenkerverschraubung durch Anziehen der Schraube 9 angezogen/verspannt. Durch die Schraubenvorspannkraft wird ein Verdrehen der Gewindebuchse 12 verhindert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Vorderachs-Anlenkung
- 2: Achse/Achskörper
- 3: Rahmenstruktur des Fahrzeugaufbaus
- 4: Längslenker
- 5: Lenker des Dreieckslenker
- 6: Lageraufnahme
- 7: Lenkeraufnahme
- 7a: Öffnung der Lenkeraufnahme
- 8: Verbindungselement, Pratze
- 8a: Durchgangsöffnung der Pratze
- 8c: Durchgangsöffnungsrand
- 8d: Durchgangsöffnungsrand
- 9: Schraube
- 9a: Schraubenkopf
- 9b: Schraubenschaft
- 10: Lenkerverschraubung
- 11: Beilegscheibe
- 12: Gewindebuchse
- 12a: Buchsenkopf
- 12b: Buchsenschaft
- 13: Außengewinde Gewindebuchse/Innengewinde Lenkeraufnahme
- 14: Innenbereich der Gewindebuchse
- 15: Verschraubungsbereich der Schraube 9
- 16: Lager

## Patentansprüche

1. Lenkerverschraubung eines Lenkers eines Fahrwerks eines Kraftfahrzeugs, insbesondere eines Nutzfahrzeugs, an einem Fahrzeugaufbau, einer Achse und/oder einem Radträger,
wobei der Lenker (5) eine endseitig angeordnete Lageraufnahme (6) und ein in der Lageraufnahme (6) aufgenommenes Lagergelenk (16) aufweist und das Lagergelenk (16) beidseitig jeweils ein äußeres Verbindungselement (8) aufweist, das mit einer Lenkeraufnahme (7) verschraubt ist, die am Fahrzeugaufbau, der Achse oder dem Radträger vorgesehen ist,
wobei zum Einstellen eines Abstands des Verbindungselements (8) zur Lenkeraufnahme (7) eine Gewindebuchse (12), aufweisend einen Buchsenkopf (12a) und einen Buchsenschaft (12b), vorgesehen ist, die mit einem Außengewinde des Buchsenschafts (12b) in ein Innengewinde der Lenkeraufnahme (7) eingreift und deren Buchsenkopf (12a) eine der Lenkeraufnahme (7) zugewandte Seite des Verbindungselementes (8) abstützt.

2. Lenkerverschraubung (20) nach Anspruch 1, **dadurch gekennzeichnet,**
(a) **dass** das äußere Verbindungselement (8) eine erste Durchgangsöffnung (8a) aufweist;
(b) **dass** die Lenkeraufnahme (7) eine zweite Öffnung (7a) aufweist, wobei die erste Durchgangsöffnung (8a) und die zweite Öffnung (7a) zueinander fluchtend angeordnet sind;
(c) **dass** ein Außengewinde des Buchsenschafts (12b) in ein Innengewinde der zweiten Öffnung (7a) eingreift und eine Buchsenöffnung der Gewindebuchse (12) bezüglich der zweiten Öffnung (7a) fluchtend ausgerichtet ist, und
(d) **dass** der Buchsenkopf (12a) einen der Lenkeraufnahme zugewandten, die erste Durchgangsöffnung (8a) einfassenden Durchgangsöffnungsrand (8c) abstützt; und
(e) **dass** der Lenker (5) mit der Lenkeraufnahme (7) durch eine Schraube (9), aufweisend einen Schraubenkopf (9a) und einen Schraubenschaft (9b), verschraubt ist, die mit dem Schraubenschaft (9b) die beiden Öffnungen (7a, 8a) und die Gewindebuchse (12) durchsetzt.

3. Lenkerverschraubung (20) nach Anspruch 2, **dadurch gekennzeichnet, dass** die Schraube (9) sich mit dem Schraubenkopf (9a) an einem von der Lenkeraufnahme abgewandten, die erste Durchgangsöffnung (8a) einfassenden Durchgangsöffnungsrand (8d) abstützt.

4. Lenkerverschraubung (20) nach Anspruch 2, **dadurch gekennzeichnet, dass** der Schraubenkopf auf einer zu der ersten Durchgangsöffnung (8a) abgewandten Seite der Lenkeraufnahme (7) angeordnet ist und die erste Durchgangsöffnung (8a) als Innengewinde ausgeführt ist und der Schraubenschaft (9b) im Innengewinde verschraubt ist.

5. Lenkerverschraubung nach einem der vorhergehenden Ansprüche, **dadurch gekennzeichnet, dass** der Buchsenkopf (12a) der Gewindebuchse (12a) Formelemente zum formschlüssigen Kontakt mit Werkzeugen für das Drehen der Gewindeschraube aufweist, vorzugsweise einen Außenmehrkant.

6. Lenkerverschraubung nach einem der vorhergehenden Ansprüche, **dadurch gekennzeichnet, dass** der Lenker (5) ein Längslenker, ein Querlenker, ein Lenker eines Dreieckslenkers, ein Lenkerarm eines Vierpunktlenkers, oder ein Panhardstab ist.

7. Anbindung einer Hinter-, Vorder-, Vor- und/oder Nachlaufachse an eine Kraftfahrzeugkarosserie, ein Fahrzeuggerippe, einen Fahrzeugleiterrahmen oder eine Fahrzeugrahmenstruktur eines Nutzfahrzeugs, umfassend eine Lenkerverschraubung nach einem der vorhergehenden Ansprüche.

8. Nutzfahrzeug mit einer Lenkerverschraubung nach einem der Ansprüche 1 bis 6.
